# EUROPEAN PATENT APPLICATION

(11) **EP 1 273 436 A1**
(43) Date of publication of application: **08.01.2003**
(21) Application number: 01202577.1
(22) Date of filing: 05.07.2001
(51) Int. Cl.: B32B 27/32, F16L 9/12, F16L 47/00, C08J 5/18, B67D 5/00, B67D 1/00, B65D 65/40

(54) **Glossy tubes and pipes**

(71) Applicant: Atofina Research S.A., 7181 Seneffe (Feluy) (BE)
(72) Inventor: Marechal, Philippe, 1400 Nivelles (BE); Maziers, Eric, 7180 Seneffe (BE)

(57) **Abstract**

A high gloss sheet or pipes or tubes or connector joints prepared from a metallocene-produced polyethylene having a density of from 0.910 g/cm³ up to 0.966 g/cm³, or up to homopymer densities, and a melt index MI2 of from 0.01 to 20 g/10min.

## Description

This invention is related to the production of high gloss sheets, pipes, tubes or connector joints and in particular to the production of high gloss tubes formed of polyethylene.

Several methods have been sought to produce high gloss tubes and pipes presenting good processability and good mechanical properties but all the blends and techniques used so far present various disadvantages.

High gloss high density polyethylene (HDPE) has been used: it is characterised by a very narrow molecular weight distribution that is typically inferior to 8. The molecular weight distribution can be completely defined by means of a curve obtained by gel permeation chromatography. Generally, the molecular weight distribution (MWD) is more simply defined by a parameter, known as the dispersion index D, which is the ratio between the average molecular weight by weight (Mw) and the average molecular weight by number (Mn). The dispersion index constitutes a measure of the width of the molecular weight distribution. It is known that a resin of narrow molecular weight distribution will produce plastic articles of very high gloss but simultaneously, that such resin will be very difficult to process and will be characterised by very poor mechanical properties. It has also been observed that said resins have poor mechanical properties, particularly, a very low environmental stress crack resistance (Modern Plastic International, August 1993, p. 45).

Low density polyethylene (LDPE) and polyethylene vinyl acetate (EVA) copolymers are used to prepare articles with very smooth surface finish and thus high gloss but they suffer from a lack of rigidity, thereby requiring thick walls if used for pressurised fluids. The polyethylene materials that offer high rigidity are characterised by a fairly rough surface resulting from the surface crystallisation of the polymer. The articles produced with these polymers thus have a mat finish.

The coextrusion of high density polyethylene (HDPE) with a thin external layer of polyamide has been used to prepare products of very high gloss but that method suffers the major drawback of necessitating an adhesive layer between the HDPE and the polyamide layers.

The coextrusion of high density polyethylene and an external layer of low density polyethylene leads to products with a fair gloss. These articles however have an unpleasant greasy touch and offer a very poor resistance to scratching.

In another method, high gloss plastic articles comprise an internal layer including a polyolefin and an external layer including a styrenic component containing from 40 to 85 wt% of styrene, based on the weight of the external layer, as disclosed for example in European Patent Application n° 00201155.9.

There is thus a need for a method for efficiently producing plastic sheets or pipes or tubes or connector joints of very high gloss as well as good processability and mechanical properties.

An aim of the present invention is to produce plastic sheets or pipes or tubes or connector joints that offer simultaneously the desired glossy appearance and a high rigidity.

It is also an aim of the present invention to obtain glossy plastic sheets or pipes or tubes or connector joints with low extrusion pressure and good resistance to sagging.

It is another aim of the present invention to produce plastic sheets or pipes or tubes or connector joints with good sealing potential and good ESCR.

It is a further aim of the present invention to manufacture plastic sheets or pipes or tubes with a high extrusion output.

The present invention provides single layer or multi-layer plastic sheets or pipes or tubes or connector joints, for which the external layer consists essentially of a metallocene-produced polyethylene having a density of from 0.910 g/cm³, preferably from 0.925 g/cm³, up to 0.966 g/cm³, or up to homopolymer densities, and a melt index MI2 of from 0.001 to 20 g/10min, preferably 0.2 to 5 g/10 min, and most preferably from 0.5 to 2.5 g/10 min, for extrusion blow moulding, and of from 0.1 to 500 g/10 min, preferably from 0.7 to 70 g/10 min for injection blow moulding.

In this specification, the density of the polyethylene is measured at 23 °C using the procedures of ASTM D 1505.

The melt index MI2 is measured using the procedures of ASTM D 1238 at 190°C using a load of 2.16 kg. The high load melt index HLMI is measured using the procedures of ASTM D 1238 at 190 °C using a load of 21.6 kg.

When multi-layer plastic sheets or pipes or tubes are produced, the external layer is prepared with a metallocene-produced polyethylene resin, the inner layer(s) is(are) prepared with any one of the known catalysts, such as a chromium or a Ziegler-Natta or a metallocene catalyst, said metallocene catalyst being either the same as or different from the metallocene catalyst used to prepare the external layer. In certain applications, it is advantageous to have both the inner and outer layers prepared with a metallocene-produced polyethylene, either the same or different.

A number of different catalyst systems have been disclosed for the manufacture of polyethylene, in particular medium-density polyethylene (MDPE) and high-density polyethylene (HDPE) suitable for blow moulding. It is known in the art that the physical properties, in particular the mechanical properties, of a polyethylene product vary depending on what catalytic system was employed to make the polyethylene. This is because different catalyst systems tend to yield different molecular weight distributions in the polyethylene produced

It is known in the art to use chromium-based catalysts to polymerise HDPE and in particular to produce high-.density polyethylene having high resistance to environmental stress cracking. For example, EP-A-0,291,824, EP-A-0,591,968 and US-A-5,310,834 each disclose mixed catalyst compositions, incorporating chromium-based catalysts, for the polymerisation of polyethylene.

Alternatively, the HDPE can be produced using a conventional Ziegler-Natta catalyst or a supported Ziegler-Natta catalyst comprising metallocene sites such as described in EP-A-0,585,512.

The HDPE can further be polymerised with a metallocene catalyst capable of producing a mono- or bi- or multimodal distribution, either in a two step process such as described for example in EP-A-0,881,237, or as a dual or multiple site catalyst in a single reactor such as described for example in EP-A-0,619,325. Any metallocene catalyst known in the art can be used in the present invention. It is represented by the general formula:

I. (Cp)ₘMRₙX_{q}

wherein Cp is a cyclopentadienyl ring, M is a group 4b, 5b or 6b transition metal, R is a hydrocarbyl group or hydrocarboxy having from 1 to 20 carbon atoms, X is a halogen, and m-1-3, n=0-3, q=0-3 and the sum m+n+q is equal to the oxidation state of the metal.

II. (C₅R'ₖ)_{g} R"ₛ (C₅R'ₖ) MQ_{3-g}

III. R"ₛ(C₅R'ₖ)₂MQ'

wherein (C₅R'ₖ) is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring, R" is a C₁-C₄ alkylene radical, a dialkyl germanium or silicon or siloxane, or a alkyl phosphine or amine radical bridging two (C₅R'ₖ) rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1 and k is 5 when s is 0, and M is as defined above.

Among the preferred metallocenes used in the present invention, one can cite among others ethylene bis-(tetrahydroindenyl) zirconium dichloride, ethylene bis-(indenyl) zirconium dichloride or bis-(n-butylcyclopentadienyl) zirconium dichloride, mono-, bi- or tri-substituted, as disclosed for example in EP-A-870,048.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

An active site must be created by adding a cocatalyst having an ionising action.

Preferably, alumoxane is used as cocatalyst during the polymerization procedure, and any alumoxane known in the art is suitable.

The preferred alumoxanes comprise oligomeric linear and/or cyclic alkyl alumoxanes represented by the formula : 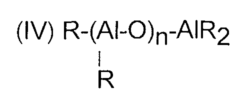 for oligomeric, linear alumoxanes
and 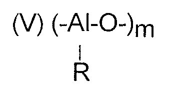 for oligomeric, cyclic alumoxanes,
wherein n is 1-40, preferably 10-20, m is 3-40, preferably 3-20 and R is a C₁-C₈ alkyl group and preferably methyl.
Methylalumoxane is preferably used.

When alumoxane is not used as a cocatalyst, one or more aluminiumalkyl represented by the formula AIRₓ are used wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

The metallocene catalyst utilised to produce a polyethylene, as required for preparing the high gloss sheets or tubes or pipes of the present invention, can be used in gas, solution or slurry polymerisation. Preferably, the polymerization process is conducted under slurry phase polymerization conditions. The polymerisation temperature ranges from 20 to 125°C, preferably from 60 to 105°C and the pressure ranges from 0.1 to 10 Mpa, preferably from 2 to 6.5 Mpa, for a time ranging from 10 minutes to 4 hours, preferably from 0.3 and 2.5 hours, most preferably from 0.5 to 1 hour.

It is preferred that the polymerization reaction be run in a diluent at a temperature at which the polymer remains as a suspended solid in the diluent.

A continuous loop reactor is preferably used for conducting the polymerisation. Multiple loop reactors can also be used for polymerisation.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.

The density of the polyethylene is regulated by the amount of comonomer injected into the reactor; examples of comonomer which can be used include C3-C22 n-olefins or non conjugated diolefins among which the preferred are: 1-olefins, butene, hexene, octene, 4-methyl-pentene, and the like, the most preferred being hexene.

The densities of the polyethylenes required for preparing the high gloss sheets, tubes or pipes of the present invention range from 0.910 g/cm³, preferably from 0.925 g/cm³ up to 0.966 g/cm³, or up to homopolymer densities.

The melt index of polyethylene is regulated by the amount of hydrogen injected into the reactor. The melt indexes useful in the present invention range from 0.01 g/10 min to 20 g/10 min, preferably from 0.2 to 5 g/10 min and most preferably from 0.5 to 2.5 g/10 min.

The polyethylene resin used in the present invention can be prepared with either a single site metallocene catalyst or with a multiple site metallocene catalyst and it has therefore either a monomodal or a bimodal molecular weight distribution. The molecular weight distribution is of from 2 to 20, preferably, of from 2 to 7 and more preferably of from 2 to 5.

The polyethylene resins produced in accordance with the above-described processes have physical properties making them particularly suitable for use as blow moulding grade polyethylenes. In addition, it has surprisingly been observed that they have good processability even when their molecular weight distribution is narrow.

The metallocene polyethylene resins are used in the present invention for manufacturing high gloss plastic sheets or pipes or tubes. The high gloss tubes or pipes of the present invention preferably have a diameter of from 0.5 to 250 mm. Said tubes or pipes are used for various applications:
- for the transport of fluid food, such as beer or milk. The smooth high gloss inner and outer surfaces prevent the accretion of debris thereby preventing the development of bacteria.
- for flexible tubes either that can be used in hygiene and cosmetics, such as skin cream, shampoo, toothpaste, pharmaceuticals, make-up, or that can be used in household products, such as adhesives, cleaning and barrier creams. The smooth and glossy outer surface gives attractiveness for retail and the good ESCR makes their handling easy and safe.
- for medical application because it is known in the art that metallocene-produced polyethylene has a low level of extractables.
- for use instead of PVC tubing especially in the food industry because they have the required rigidity.
- for drip tapes to transport water in draining systems, because the pressure drop through the pipes remains low. The pressure drop is a function of the surface roughness: the smoother the surface, the smaller the pressure drop. This is discussed for example in "Perry's Chemical Engineers' Handbook, sixth edition, Ed. By R.H. Perry and D. Green, at pages 5-25 to 5-26.

The sheets, tubes and pipes can be manufactured by any method known in the art such as:
- high gloss pipes can be extruded in a classical pipe extrusion line.
- thin high gloss tubes can be extruded in blown film type machines operated at low or even fractional blow up ratio (BUR), typically at a BUR of from 0.3 to 1.5.
- high gloss tubes may also be manufactured by the longitudinal sealing of high gloss sheets.
- connector joints can be prepared by injection moulding.

During extrusion, it is possible to incorporate fluoroelastomer in the resin allowing for very low transformation temperatures of from 140 to 180 °C, preferably, around 160 °C. Such temperatures are 30 to 40 °C lower than the transformation temperature normally used.

It is also possible to produce coextruded plastic tubes wherein the external layer is a metallocene-produced polyethylene and the internal layer is a polyethylene produced by any conventional method. The external layer represents from 5 to 14 %, preferably about 10 %, of the total wall thickness.

The plastic tubes of the present invention are characterised by a very high gloss, as measured using the method of ASTM D 2457-90 standard test and a low haze as measured by the method of ASTM D 1003-92 standard test.

The environmental stress crack resistance (ESCR) is measured following the method of standard test ASTM D 1693 method B with a solution of 10 % Igepal CO630.

Additionally and quite surprisingly, the production rate is very high even though the melt index is low.

### Examples.

Several polyethylene resins were prepared and tested for ESCR, rigidity, gloss and haze.

### Resin R1.

The polyethylene resin was obtained by continuous polymerisation in a loop slurry reactor with a supported and ionised metallocene catalyst prepared in two steps by first reacting SiO₂ with MAO to produce SiO₂.MAO and then reacting 94 wt% of the SiO₂.MAO produced in the first step with 6 wt% of ethylene bis-(tetrahydroindenyl) zirconium dichloride. The dry catalyst was slurried in isobutane and pre-contacted with triisobutylaluminium (TIBAI, 10 wt% in hexane) before injection in the reactor. The reaction was conducted in a slurry loop reactor with the polymerisation temperature being maintained at 90 °C. The operating conditions were as follows:
- TIBAI conc (ppm): 100-200
- iC4 feed (kg/h) : 1940
- C2 feed (kg/h): 3900
- C6 feed (g/kg C2): 22
- H2 feed (g/t) : 42

Wherein, C2 is ethylene, C6 is 1-hexene, iC4 is isobutane and TIBAI is triisobutylaluminium.

### Resin R2.

Resin R2 is a classical medium density polyethylene (MDPE) resin produced with a chromium catalyst commercialised under the name ®Finathène HF513. It was prepared with a titanated supported chromium catalyst.

The properties of these two resins are summarised in Table I.

**TABLE I.**

| Resin | Density g/cm³ | HLMI G/10' | MI2 g/10' | MWD |
|---|---|---|---|---|
| R1 | 0.934 | 25.1 | 0.96 | 2.6 |
| R2 | 0.934 | 14.5 | 0.15 | 14 |

These two resins were extruded to produce tubes on a Reifenhauser machine having a screw diameter of 70 mm and a length to diameter ratio (L/D) of 25.

The properties of the tubes prepared from these two resins are summarised in Table II.

**TABLE II.**

| | R1 | R2 |
|---|---|---|
| Density | 934 g/l | 934 g/l |
| MWD | 2.6 | 14 |
| Pipe Diameter | 32 mm | 32 mm |
| Wall thickness | 3 mm | 3 mm |
| Extrusion T° | 150°C | 200°C |
| Screw speed | 20 rpm | 40 rpm |
| Extrusion P | 95 bar | 175 bar |
| Extrusion output | 24.6 kg/h | 46 kg/h |
| Output/rpm | 1.25 kg/rpm | 1.12 kg/rpm |
| Bar/(kg/h)^{a} | 3.8 | 3.8 |
| Gloss at 20° | 97 | 79 |
| Gloss at 60° | 78 | 71 |
| Gloss at 85° | 17 | 15 |
| Rigidity Mpa | 720 | 725 |
| Read through possible^{b} | Easy | Very difficult |
| ESCR | >900 | >900 |

| | | |
|---|---|---|
| ^{a} The expression "bar/(kg/h)" represents the specific extrusion pressure: it decreases with increasing output because the polymers are thinning when the shear pressure is increasing. If the screw speed is thus brought from 20 rpm to 40 rpm for the resin R1 according to the present invention, in order to equate the screw speed of comparative resin R2, the specific extrusion pressure will be lower than the present value of 3.8 bar/(kg/h). The specific extrusion pressure also decreases with increasing extrusion temperature; it will thus be further reduced for the resin R1 of the present invention if the extrusion temperature is raised from 150 °C to 200 °C. | | |
| ^{b} The read through possibility is determined by placing a half pipe, cut along its longitudinal axis on a text. | | |

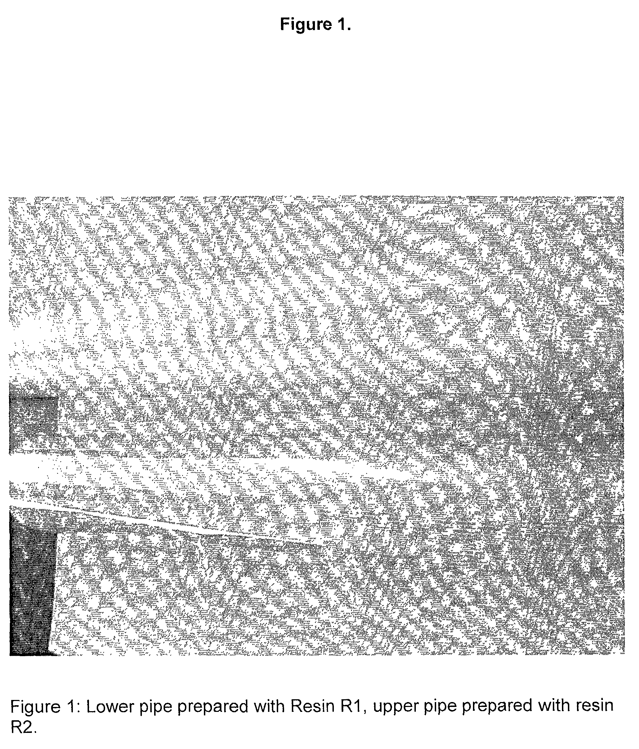

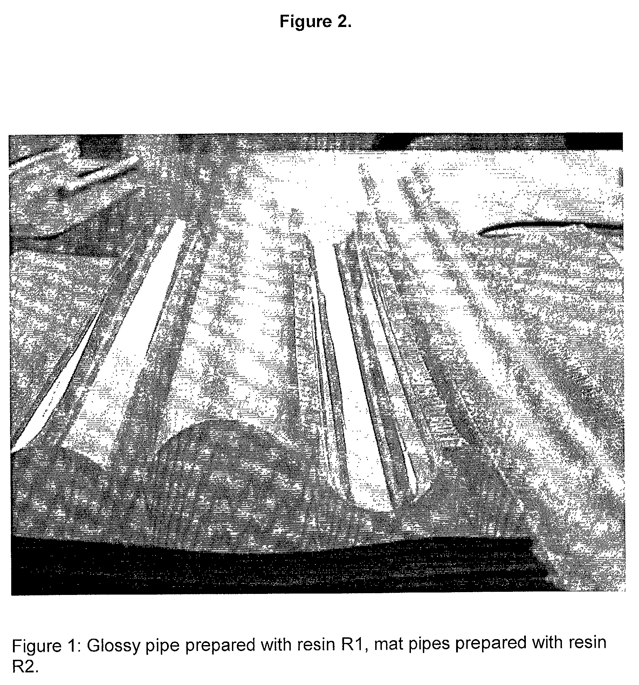

It must be noted that the difference in gloss between the two resins is reduced because the measurements are not carried out on a flat surface but on the cylindrical pipe surface. The difference in gloss between the two resins is highest for low angles. Figures 1 and 2 represent photographs of the pipes prepared respectively with resins R1 and R2: they clearly show the difference in gloss between the pipes produced respectively with the two resins.

In addition, the pipes prepared with the metallocene-produced polyethylene have a good thickness distribution. They can be produced with a low extrusion pressure, the extrusion temperature is lower than that of the pipes prepared with conventional MDPE and the extrusion output is very high.

## Claims

1. High gloss sheets or pipes or tubes or connector joints comprising one or more layers **characterised in that** the external layer is prepared essentially from a metallocene-produced polyethylene resin and has a gloss of at least 40.

2. High gloss sheets or pipes or tubes or connector joints according to claim 1, wherein the metallocene-produced polyethylene has a density of from 0.910 g/cm³ up to 0.966 g/cm³, or up to homopolymer densities, and a melt index MI2 of from 0.001 to 20 g/10min, for extrusion blow moulding, and of from 0.1 to 500 g/10 min, for injection moulding.

3. High gloss sheets or pipes or tubes or connector joints according to claim 1 or claim 2 wherein the metallocene-produced polyethylene has a molecular weight distribution of from 2 to 7.

4. High gloss sheets or pipes or tubes or connector joints according to any one of the preceding claims made of a single layer.

5. High gloss sheets or pipes or tubes or connector joints according to any one of claims 1 to 3 made of several layers, wherein each layer is the same or different.

6. High gloss tubes prepared according to any one of the preceding claims.

7. Use of the high gloss tubes according to claim 6 for handling fluid food products.

8. Use according to claim 7, to reduce bacterial proliferation.

9. Use of the high gloss tubes according to claim 6 for cosmetic and hygiene tubes.

10. Use of the high gloss tubes according to claim 6 for medical applications.

11. Use of the high gloss tubes according to claim 6 for replacement of PVC tubing.
